# DEMANDE DE BREVET EUROPEEN

(11) **EP 3 035 133 A1**
(43) Date de publication de la demande: **22.06.2016**
(21) Numéro de dépôt: 14198049.0
(22) Date de dépôt: 15.12.2014
(51) Int. Cl.: G04G 21/02, G01J 1/42, G01J 1/50

(54) **ELÉMENT D'HABILLAGE AVEC CAPTEUR DE LUMINOSITÉ**

(71) Demandeur: The Swatch Group Research and Development Ltd., 2074 Marin (CH)
(72) Inventeur: François, Nicolas, 2000 Neuchâtel (CH)
(74) Mandataire: Tournel, Maxime Jean-Joseph

(57) **Abrégé**

La présente invention concerne un élément d'habillage (1) d'une pièce d'horlogerie comprenant une armature réalisée en un premier matériau, ledit élément d'habillage comprenant en outre au moins un capteur de luminosité (120), caractérisé en ce que ledit capteur de luminosité est formé d'au moins une pastille (122), ladite pastille étant composée d'un liant et d'un pigment photochromique sensible à une longueur d'onde spécifique, ledit pigment photochromique étant choisi pour réagir à une intensité spécifique du rayonnement de la longueur d'onde spécifique de sorte que ledit pigment passe d'une première couleur à une seconde couleur lorsque ladite intensité spécifique du rayonnement est atteinte.

## Description

La présente invention est relative à un élément d'habillage d'une pièce d'horlogerie comprenant une armature réalisée en un premier matériau, ledit élément d'habillage comprenant en outre au moins un capteur de luminosité.

### ARRIERE PLAN TECHNOLOGIQUE

Il est connu des objets portables tels que des montres équipées de capteurs permettant la détection des rayons ultraviolets ou UV. Ces appareils comprennent un capteur semi-conducteur ultraviolet consistant en un composant GaAsP associé à un filtre UV.

Un inconvénient de ces capteurs semi-conducteurs ultraviolets est qu'ils ont un temps de latence pour l'affichage et qu'ils sont coûteux. De plus ces capteurs étant électroniques, leur utilisation dans une montre mécanique est peu souhaitée.

Une autre possibilité connue consiste en un bracelet réalisé en plastique dont ledit plastique comprend un pigment photochromique c'est-à-dire changeant de couleur selon la lumière. Ces pigments photochromiques peuvent être choisis pour être sensibles à différentes longueurs d'ondes, dont les ultraviolets.

Un inconvénient de ce genre de bracelet est qu'il est d'une couleur unie et que la variation de couleur en fonction du niveau de lumière UV se fait autour de cette couleur unie. On comprend par là qu'un bracelet dont la couleur initiale est le vert va voir sa teinte varier d'un vert pâle à un vert foncé en fonction de l'intensité de la lumière ultraviolette.

Un inconvénient de ce type de produit est que l'indication n'est pas précise puisqu'il est difficile d'associer une teinte spécifique avec un niveau de luminosité ultraviolet.

### RESUME DE L'INVENTION

L'invention concerne un élément d'habillage qui pallie les inconvénients susmentionnés de l'art antérieur en proposant un objet portable capable de fournir une indication de luminosité de manière lisible et fiable, tout en étant simple à mettre en oeuvre.

A cet effet, l'invention a pour but de fournir un élément d'habillage d'une pièce d'horlogerie comprenant une armature réalisée en un premier matériau, ledit élément d'habillage comprenant en outre au moins un capteur de luminosité, caractérisé en ce que ledit capteur de luminosité est formé d'au moins une pastille, ladite pastille étant composée d'un liant et d'un pigment photochromique sensible à une longueur d'onde spécifique, ledit pigment photochromique étant choisi pour réagir à une intensité spécifique du rayonnement de la longueur d'onde spécifique de sorte que ledit pigment passe d'une première couleur à une seconde couleur lorsque ladite intensité spécifique du rayonnement est atteinte.

Cet élément d'habillage muni d'au moins un capteur de luminosité selon l'invention présente l'avantage d'être facilement lisible puisqu'un changement de couleur annonce un franchissement de seuil d'intensité lumineuse. De plus on évite le recours à un système électronique gourmand en énergie.

Dans un premier mode de réalisation avantageux, ledit capteur de luminosité est formé d'une pluralité de pastilles, chaque pastille réagissant à une intensité spécifique du rayonnement de la longueur d'onde spécifique qui lui est propre.

Dans un second mode de réalisation avantageux, lesdites pastilles ont toutes la même première couleur.

Dans un troisième mode de réalisation avantageux, lesdites pastilles ont toutes la même seconde couleur.

Dans un quatrième mode de réalisation avantageux, lesdites pastilles sont conçues de sorte que leur seconde couleur permette un dégradé lorsqu'elles sont toutes passées de la première couleur à la seconde couleur.

Dans un cinquième mode de réalisation avantageux, la pastille se présente sous la forme d'une encre ou peinture ou laque.

Dans un sixième mode de réalisation avantageux, la pastille se présente sous la forme d'un insert revêtu par ledit pigment photochromique.

Dans un autre mode de réalisation avantageux, la pastille se présente sous la forme d'un insert, ledit pigment photochromique étant dispersé dans le matériau formant ledit insert.

Dans un autre mode de réalisation avantageux, l'armature comprend au moins une creusure dans laquelle la pastille est agencée.

Dans un autre mode de réalisation avantageux, l'armature est une lunette.

Dans un autre mode de réalisation avantageux, l'armature est une glace.

Dans un autre mode de réalisation avantageux, l'armature est une carrure de boite de montre.

Dans un autre mode de réalisation avantageux, l'armature est un bracelet.

Dans un autre mode de réalisation avantageux, le bracelet comprend deux brins de bracelet en matériaux plastiques, ledit capteur de luminosité étant agencé sur au moins un des deux brins.

Dans un autre mode de réalisation avantageux, le bracelet comprend une pluralité de maillons articulés entre eux, ledit capteur de luminosité étant agencé sur au moins un maillon.

Dans un autre mode de réalisation avantageux, ledit bracelet est fermé par un fermoir à boucle déployante, ledit capteur de luminosité étant agencé sur ledit fermoir.

Dans un autre mode de réalisation avantageux, l'armature est une couronne.

Dans un autre mode de réalisation avantageux, ledit pigment photochromique est choisi pour réagir au rayonnement ultraviolet.

### BREVE DESCRIPTION DES FIGURES

Les avantages d'un tel élément d'habillage apparaîtront clairement à la lecture de la description qui va suivre et à l'examen du dessin qui l'illustre à titre d'exemple et dans lequel :
- les figures 1 et 2 représentent de manière schématique une pièce d'horlogerie selon la présente invention ;
- les figures 3 et 4 représentent de manière schématique une lunette formant l'élément d'habillage selon la présente invention ;
- les figures 5 et 6 représentent de manière schématique une glace formant l'élément d'habillage selon la présente invention ;
- la figure 7 représente de manière schématique une carrure formant l'élément d'habillage selon la présente invention ;
- la figure 8 représente de manière schématique un brin de bracelet formant l'élément d'habillage selon la présente invention ;
- la figure 9 représente de manière schématique des maillons de brin de bracelet formant l'élément d'habillage selon la présente invention ;
- les figures 10 à 11 représentent de manière schématique un fermoir de bracelet formant l'élément d'habillage selon la présente invention ;
- la figures 12 et 13 représentent de manière schématique un cadran formant l'élément d'habillage selon la présente invention.

### DESCRIPTION DETAILLEE

La présente invention concerne un élément d'habillage 1 d'une pièce d'horlogerie ou montre 100.

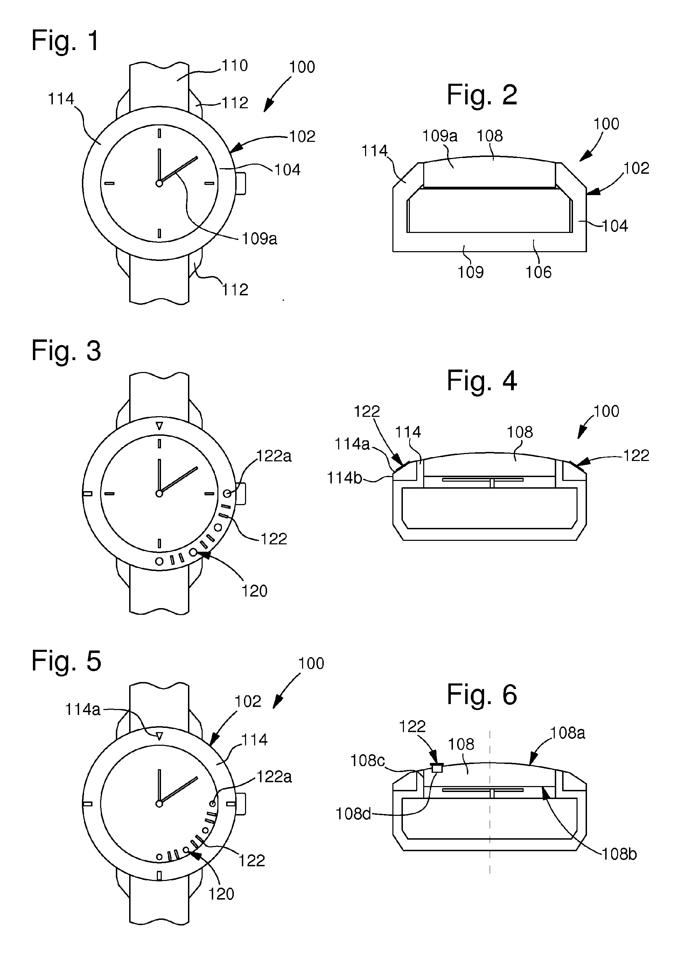

La pièce d'horlogerie 100, visible aux figures 1 et 2, est par exemple une montre bracelet et comprend un boitier 102. Ce boitier est formé par une carrure 104 fermée par un fond 106 et une glace 108. La pièce d'horlogerie comprend également un bracelet 110. Ce dernier est fixé à la carrure via deux paires de cornes 112. Le bracelet peut être constitué de deux brins de bracelet, chaque brin étant fixé à une paire de cornes et relié à l'autre brin via un fermoir.

L'élément d'habillage 1 comprend une armature réalisée en un premier matériau. Ce premier matériau peut être un matériau métallique ou plastique.

Sur cette armature, au moins un capteur de luminosité 120 est agencé. Ce capteur de luminosité est utilisé afin de permette à l'utilisateur de visualiser à quelle intensité de luminosité il se trouve par rapport à une référence. En effet, il est connu l'indice UV utilisé pour informer de l'intensité du rayonnement ultraviolet. Il existe donc un seuil minimal à partir duquel une information sur cette intensité du rayonnement ultraviolet est visible.

Avantageusement selon l'invention, le capteur de luminosité comprend au moins une pastille photochromique 122. Cette pastille photochromique est composée principalement d'un pigment photochromique tel que ceux définis dans le brevet US5208132 A, qui est dispersé dans une matrice organique ou inorganique. Cette matrice est un liant servant de support pour le pigment.

Un tel pigment photochromique présente une première couleur et change de couleur pour présenter une seconde couleur lorsque l'intensité du rayonnement atteint une valeur spécifique audit pigment. Ici, il s'agira de l'intensité du rayonnement ultraviolet de longueur d'ondes 100 à 400nm.

Cette caractéristique permet d'indiquer visuellement le franchissement d'un seuil d'intensité du rayonnement ultraviolet.

Dans un mode de réalisation préféré, le capteur de luminosité permet la visualisation d'une échelle de luminosité. Pour cela, le capteur de luminosité comprend une pluralité de pastilles 122 photochromiques. Chaque pastille photochromique comprend un pigment réagissant à une intensité spécifique. Par conséquent, chaque pastille 122 change de couleur lorsqu'une intensité du rayonnement spécifique est atteinte. Pour avoir une échelle de luminosité, il sera fait en sorte que les intensités spécifiques des pastilles 122 soient croissantes. Ainsi, lorsque l'utilisateur portant l'objet portable se met au soleil, les pastilles changent de couleur au fur et à mesure permettant une indication visuelle. Ces pastilles 122 peuvent être collées les unes aux autres ou espacées.

Dans une variante préférée, les différentes pastilles composant l'échelle de luminosité présentent toute une première couleur, c'est à dire une couleur au repos identique. On comprend par là qu'à un niveau de luminosité en dessous du seuil minimal, toutes les pastilles ont la même couleur.

Dans une autre variante préférée, les différentes pastilles composant l'échelle d'luminosité présentent toute une seconde couleur, c'est à dire une couleur, lorsque leur seuil spécifique est atteint, identique. On comprend par là qu'à la luminosité maximale mesurable, toutes les pastilles auront la même couleur.

Dans une autre variante préférée, les différentes pastilles composant l'échelle de luminosité présentent toute une première couleur identique mais sont réalisées pour qu'elles n'aient pas toutes une seconde couleur identique afin de permettre un dégradé. Plus précisément, les pastilles sont conçues pour que, lorsqu'elles forment une échelle de luminosité, les pastilles changeant de couleur les premières ont une seconde couleur plus claire que les pastilles changeant de couleur en dernier. Par exemple, les premières pastilles deviennent jaunes et les dernières deviennent rouges. Cela permet une indication double : non seulement l'utilisateur sait que la luminosité augmente car le nombre de pastilles changeant de couleur augmente mais il sait également qu'il se rapproche d'une intensité maximale car la couleur varie et devient de plus en plus foncée.

On comprendra donc ici que le pigment photochromique est du type réversible. Cela signifie que lorsque le pigment atteint ou dépasse un seuil de luminosité spécifique, il change de couleur passant d'une première couleur à une seconde couleur. Mais cela signifie aussi que lorsque la luminosité repasse en dessous du seuil spécifique, le pigment passe de la seconde couleur vers la première couleur.

La matrice utilisée pour la dispersion du pigment peut être de différentes sortes.

Une première catégorie de matrice comprend les encres, laques et peintures. Cette matrice consiste en un liant élastomérique mélangé avec au moins un solvant, un plastifiant et un dispersant. Une telle matrice peut être un polyuréthane réticulé.

Une seconde catégorie de matrice comprend les granulés thermoplastiques. Cette matrice consiste en une résine mélangée avec au moins un dispersant et un plastifiant.

Une troisième catégorie de matrice comprend le mélange caoutchouc. Cette matrice consiste en un élastomère mélangé avec au moins des charges, un dispersant et un système de vulcanisation. Cette catégorie permet alors de réaliser des inserts comprenant ledit pigment photochromique afin de former une mosaïque.

Une quatrième catégorie de matrice comprend les mélanges thermodurcissables. Ces mélanges consistent en une résine liquide mélangée avec au moins un dispersant.

Il est ainsi possible d'obtenir une pastille se présentant sous la forme d'un insert organique/inorganique transparent (Polymétacrylate de méthyle, résine acrylique, époxy, verre de formule chimique brute SiO2 ou Al2O3 ou C). Cet insert peut être sérigraphié sur une face avec une encre à base de pigment photochromique ou avoir le pigment photochromique dispersé dans le matériau formant l'insert.

Dans un premier mode d'exécution, l'élément d'habillage est une lunette 114 comme visible aux figures 3 et 4. Cette lunette 114 peut être une lunette tournante ou une lunette fixe. Dans le cas d'une lunette fixe, cette lunette peut être un anneau fixé à la carrure de sorte à ne pas pouvoir tourner ou être directement intégrée à la carrure 104 et former ainsi une carrure-lunette.

Une telle lunette 114 présente une paroi supérieure 114a qui est la face visible par l'utilisateur et une paroi verticale 114b permettant à l'utilisateur de faire tourner la lunette dans le cas d'une lunette tournante.

Dans ce mode d'exécution, les pastilles 122 comprenant les pigments photo-électriques sont agencées sur la paroi supérieure 114a faisant office de face visible.

Dans le cas où les pastilles 122 se présentent sous la forme d'une encre ou peintures, ces pastilles sont sérigraphiées sur ladite paroi supérieure. Une échelle peut également être sérigraphiée pour associer une indication chiffrée à ces pastilles photochromiques. Bien entendu, il peut être prévu que les valeurs importantes telles que 500Lux, 1000Lux, 20000Lux, 100000Lux soient visualisées par des pastilles différentes 122a.

Dans le cas où les pastilles se présentent sous la forme d'insert, la paroi supérieure 114a de la lunette 114 comprend des creusures (non représentées). Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une lunette ayant un aspect bi-matière lorsqu'une lunette en métal présente des inserts en caoutchouc.

Ce capteur de luminosité 120 peut être agencé sur un quart de la lunette ou un tiers ou une demi-lunette.

Dans un second mode d'exécution visible aux figures 5 et 6, l'élément d'habillage est la glace 108 de l'objet portable. Une telle glace 108 est fixée à la carrure 104 et présente une face supérieure 108a, une face inférieure 108b et une tranche latérale 108c pour la fixation.

Dans ce second mode d'exécution, les pastilles 122 photochromiques sont agencées sur la face supérieure 108a de la glace. Il serait possible de les mettre sur la face inférieure, si le matériau transparent sélectionné laissait passer les UV.

Dans le cas où les pastilles se présentent sous la forme d'une encre ou peinture, ces pastilles sont sérigraphiées sur ladite face supérieure 108a. Une échelle peut également être sérigraphiée pour associer une indication chiffrée à ses pastilles photochromiques. Cette échelle peut aussi être sérigraphiée sur la lunette.

Dans une variante, la glace présente des creusures 108d de très faibles épaisseurs. Ces creusures permettent d'y placer l'encre photochromique tout en s'assurant d'une surface de glace 108 parfaitement lisse, les risques de chocs écaillant ladite encre sont donc diminués.

Dans le cas où les pastilles 122 se présentent sous la forme d'insert, la face supérieure 108a de la glace 108 comprend des creusures 108d. Le nombre de creusures est identique au nombre d'inserts. Les inserts peuvent alors être placés et fixés dans les creusures par collage par exemple. Toutefois, il reste possible de directement surmouler les inserts dans les creusures. On obtient alors une glace ayant un aspect bi-matière.

Il est possible, pour ces deux cas de figure, que les pastilles photochromiques 122 soient agencées sur la face supérieure de la glace mais que les indications chiffrées de luminosité soient placées sur le cadran ou sur la face inférieure de la glace.

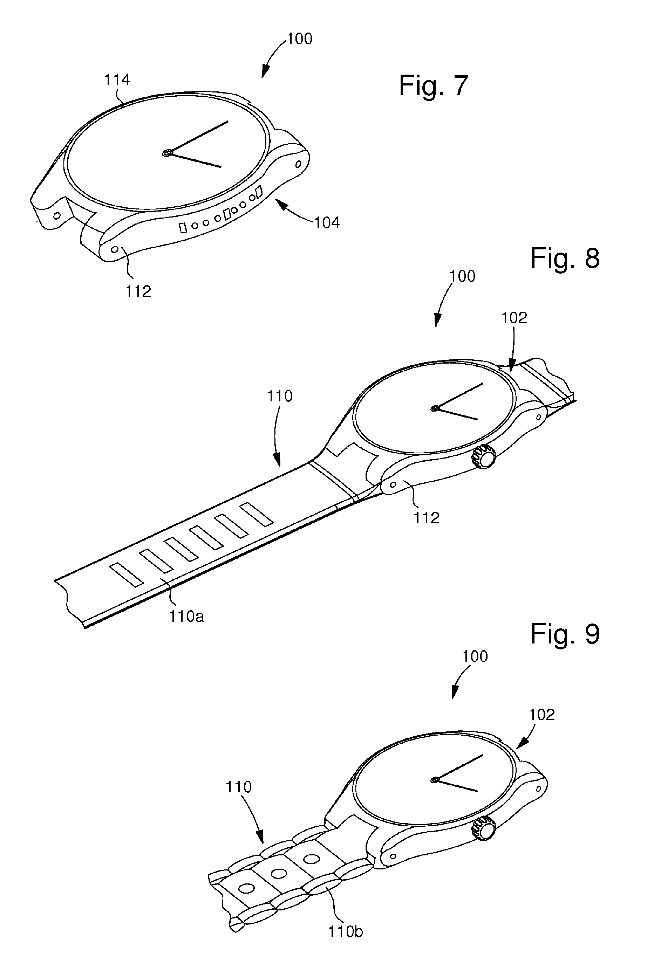

Dans un troisième mode d'exécution visible à la figure 7, l'élément d'habillage est la carrure 104 de l'objet portable.

Comme pour le premier et le second mode d'exécution, les pastilles photochromiques sous forme d'encre ou d'inserts sont agencées directement sur la carrure ou dans des creusures sur ladite carrure. Des indications chiffrées de luminosité peuvent être sérigraphiées ou gravées sur la carrure.

Dans un quatrième mode d'exécution, l'élément d'habillage est le bracelet 110 de la montre. En effet, la pièce d'horlogerie est munie d'un bracelet fixé à la carrure via deux paires de cornes.

Dans un premier cas visible à la figure 8, le bracelet 110 est constitué de deux brins 110a de bracelet, chaque brin étant fixé à une paire de cornes 112 et relié à l'autre brin via un fermoir 111. Préférentiellement, les brins 110a de bracelet sont réalisés en caoutchouc ou plastique.

Plusieurs solutions sont possibles pour l'agencement des pastilles photochromiques 122.

Une première solution consiste à utiliser des pastilles sous forme d'encre et à déposer cette encre sur la surface d'un brin de bracelet.

Une seconde solution consiste à utiliser des pastilles sous forme d'insert et à placer et fixer ces inserts dans des creusures faites dans le brin de bracelet.

Une troisième solution consiste à utiliser des pastilles sous forme d'encre et à déposer cette encre sur un support flexible. Ce support flexible étant ensuite inséré dans le brin de bracelet de sorte que les pastilles soient visibles.

Dans un second cas visible à la figure 9, le bracelet est en métal et est alors constitué d'une pluralité de maillons 110b attachés les uns aux autres par l'intermédiaire de goupilles. Cela permet d'avoir des maillons 110b qui supportent les pastilles photochromiques et qui peuvent pivoter les uns par rapport aux autres.

Ce brin de bracelet est également constitué d'un fermoir. Ce fermoir se présente ici sous la forme d'une boucle déployante 111. Une telle boucle déployante est composée généralement de trois parties 111 a, 111 b, 111 c comme des longerons et articulées les unes par rapport aux autres. Deux de ces parties sont fixées à un maillon.

Ces parties composant la boucle déployante sont alors conçues pour s'articuler de sorte qu'elles puissent s'empiler, ces trois parties 111 a, 111 b, 111 c n'en faisant alors qu'une. Cette configuration permet d'agrandir la longueur du bracelet momentanément pour la fixation au poignet de l'utilisateur.

Les pastilles photochromiques sous forme d'encre ou d'inserts sont alors agencées au niveau des maillons 110b dudit bracelet, directement sur le bracelet ou dans des creusures de celui-ci.

Préférentiellement, chaque maillon 110b porte une pastille photochromique.

Encore plus préférentiellement, les pastilles photochromiques sont agencées sur les maillons placés entre la paire de cornes située à 6H et la boucle déployante. Effectivement, lorsqu'une pièce d'horlogerie se trouve au poignet de l'utilisateur, les maillons situés entre la paire de cornes située à 6H et la boucle déployante sont les plus accessibles par l'utilisateur. Ce dernier a juste à légèrement tourner son poignet pour les voir. Ils sont encore plus visibles lorsque l'utilisateur à ses bras posés sur une table ou un bureau. Cet agencement permet de ne pas surcharger le visuel du cadran en ayant des pastilles sur la glace ou la lunette tout en offrant une bonne visibilité.

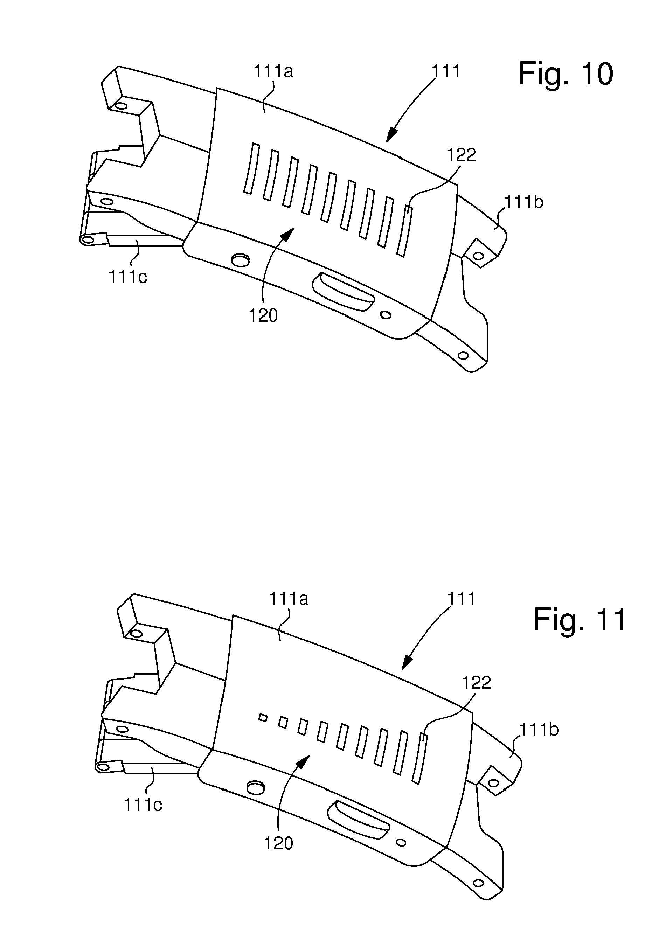

Dans un cinquième mode d'exécution visible aux figures 10 à 12, l'élément d'habillage est le fermoir 111 c'est-à-dire la boucle déployante du bracelet. En effet, une telle boucle déployante est composée généralement de trois parties comme des longerons, articulées les unes par rapport aux autres. Deux de ces parties sont fixées à un maillon. Ces parties composant la boucle déployante sont alors conçues pour s'articuler de sorte qu'elles puissent s'empiler, ces trois parties n'en faisant alors qu'une. Pour certains modèles de boucle déployante, une des parties fait office de pièce principale 111a car c'est cette partie qui accueille les deux autres parties 111b, 111c, cette partie dite principale est la partie visible de l'extérieur. De l'extérieur, l'utilisateur voit donc une partie ayant la forme d'une plaque de métal sur laquelle des indications comme le nom de la marque, peuvent être par exemple gravées.

Avantageusement, la présente invention utilise cette surface pour l'agencement du capteur de luminosité. Les pastilles photochromiques sont donc disposées sur cette surface de la partie centrale 111 a de la boucle déployante comme visible à la figure 10.

Les pastilles photochromiques peuvent être alignées et associées à une échelle d'indications chiffrées. Il est toutefois possible que les pastilles soient configurées pour avoir des tailles différentes selon la luminosité comme visible à la figure 11. Par exemple, les pastilles peuvent se présenter sous la forme de barrettes de plus en plus grandes à mesure que l'intensité du rayonnement augmente. De ce fait, l'utilisateur est capable, sans indication chiffrée, d'avoir une information fiable.

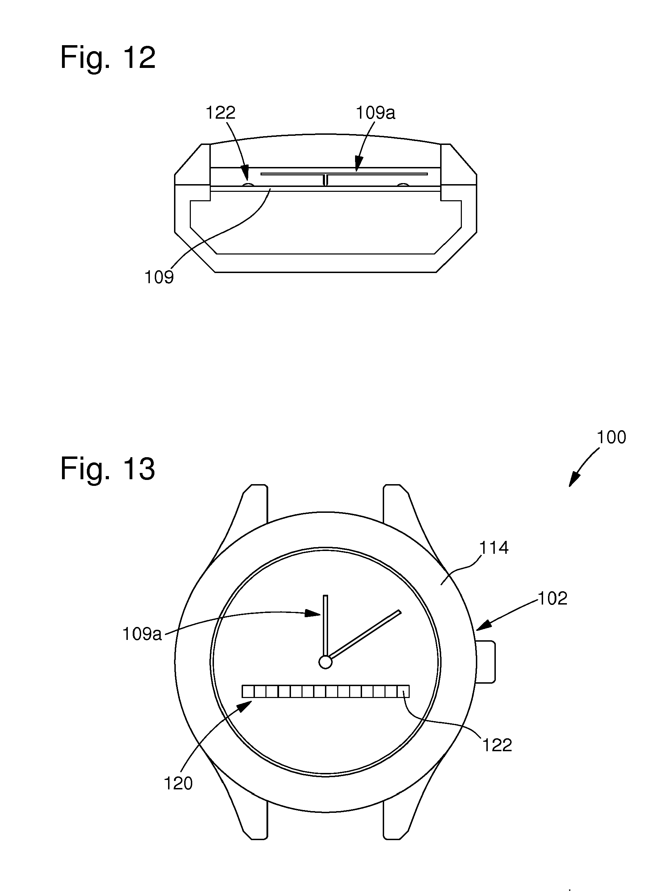

Dans un sixième mode d'exécution visible aux figures 12 et 13, l'élément d'habillage est le cadran de la pièce d'horlogerie. En effet, étant donné que la glace de la pièce d'horlogerie est en principe suffisamment transparente, il est envisageable de déposer la ou les pastilles photochromiques directement sur le cadran. Cette configuration permet avantageusement d'éviter tout risque de dommages liés à des rayures ou chocs.

Ce mode d'exécution est possible si la glace 108 n'est pas munie d'un revêtement filtrant de sorte que la totalité des rayons de la longueur d'onde spécifique puisse être captée par lesdites pastilles photochromiques 122.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il est envisageable que le pigment photochromique soit sensible à un rayonnement d'une autre longueur d'onde comme les infrarouges ou le spectre visible. Il est aussi possible d'avoir un capteur de luminosité qui peut détecter préférentiellement les UV-A dont la longueur d'onde varie de 400 à 315 nm ou les UV-B dont la longueur d'onde varie de 315 à 280 nm, ou encore les UV-C dont la longueur d'onde varie de 280 à 100 nm.

Il est également possible d'avoir plusieurs capteurs de luminosités avec chaque capteur sensible à une longueur d'onde spécifique. On est alors capable d'obtenir un objet portable qui pourrait être capable de détecter les UV-A dont la longueur d'onde varie de 400 à 315 nm ou les UV-B dont la longueur d'onde varie de 315 à 280 nm, ou encore les UV-C dont la longueur d'onde varie de 280 à 100 nm.

Dans une autre variante, la pastille combine la fonction photochromique à une autre fonction. Par exemple il peut être prévu d'utiliser des pigments phosphorescents pour des applications dans les montres de plongée de sorte à avoir une visibilité du capteur de luminosité. Dans un autre exemple, il peut être prévu d'utiliser des pigments thermo-chromiques permettant également de réagir à un seuil de température critique provoqué par l'intensité lumineuse sur le capteur.

## Revendications

1. Elément d'habillage (1) d'une pièce d'horlogerie comprenant une armature réalisée en un premier matériau, ledit élément d'habillage comprenant en outre au moins un capteur de luminosité (120), **caractérisé en ce que** ledit capteur de luminosité est formé d'au moins une pastille (122), ladite pastille étant composée d'un liant et d'un pigment photochromique sensible à une longueur d'onde spécifique, ledit pigment photochromique étant choisi pour réagir à une intensité spécifique du rayonnement de la longueur d'onde spécifique de sorte que ledit pigment passe d'une première couleur à une seconde couleur lorsque ladite intensité spécifique du rayonnement est atteinte.

2. Elément d'habillage selon la revendication 1, **caractérisé en ce que** ledit capteur de luminosité est formé d'une pluralité de pastilles, chaque pastille réagissant à une intensité spécifique du rayonnement de la longueur d'onde spécifique qui lui est propre.

3. Elément d'habillage selon la revendication 2, **caractérisé en ce que** lesdites pastilles ont toutes la même première couleur.

4. Elément d'habillage selon la revendication 3, **caractérisé en ce que** lesdites pastilles ont toutes la même seconde couleur.

5. Elément d'habillage selon la revendication 3, **caractérisé en ce que** lesdites pastilles sont conçues de sorte que leur seconde couleur permettent un dégradé lorsqu'elles sont toutes passées de la première couleur à la seconde couleur.

6. Elément d'habillage selon l'une des revendications précédentes, **caractérisé en ce que** la pastille se présente sous la forme d'une encre ou peinture ou laque.

7. Elément d'habillage selon l'une des revendications 1 à 5, **caractérisé en ce que** la pastille se présente sous la forme d'un insert revêtu par ledit pigment photochromique.

8. Elément d'habillage selon l'une des revendications 1 à 8, **caractérisé en ce que** la pastille se présente sous la forme d'un insert, ledit pigment photochromique étant dispersé dans le matériau formant ledit insert.

9. Elément d'habillage selon l'une des revendications précédentes, **caractérisé en ce que** l'armature comprend au moins une creusure dans laquelle la pastille est agencée.

10. Elément d'habillage selon l'une des revendications précédentes, **caractérisé en ce que** l'armature est une lunette (114).

11. Elément d'habillage selon l'une des revendications 1 à 9, **caractérisé en ce que** l'armature est une glace (108).

12. Elément d'habillage selon l'une des revendications 1 à 9, **caractérisé en ce que** l'armature est une carrure (104) de boite (102) de montre.

13. Elément d'habillage selon l'une des revendications 1 à 9, **caractérisé en ce que** l'armature est un bracelet (110).

14. Elément d'habillage selon la revendication 13, **caractérisé en ce que** le bracelet comprend deux brins (110a) de bracelet en matériaux plastiques, ledit capteur de luminosité étant agencé sur au moins un des deux brins.

15. Elément d'habillage selon la revendication 13, **caractérisé en ce que** le bracelet comprend une pluralité de maillons (110b) articulés entre eux, ledit capteur de luminosité étant agencé sur au moins un maillon.

16. Elément d'habillage selon la revendication 13, **caractérisé en ce que** ledit bracelet est fermé par un fermoir (111) à boucle déployante, ledit capteur de luminosité étant agencé sur ledit fermoir.

17. Elément d'habillage selon l'une des revendications 1 à 9, **caractérisé en ce que** l'armature est une couronne.

18. Elément d'habillage selon l'une des revendications précédentes, **caractérisé en ce que** ledit pigment photochromique est choisi pour réagir au rayonnement ultraviolet.
